# EUROPEAN PATENT SPECIFICATION

(11) **EP 3 160 672 B1**
(45) Date of publication and mention of the grant of the patent: **11.08.2021**
(21) Application number: 15729489.3
(22) Date of filing: 17.06.2015
(51) Int. Cl.: B23C 5/10

(54) **MILLING CUTTER WITH CORE HAVING TWO TAPERED PORTIONS**
FRÄSER MIT KERN MIT ZWEI KONISCHEN ABSCHNITTEN
FRAISE AVEC PARTIE CENTRALE AYANT DEUX SECTIONS CONIQUES

(30) Priority: 27.06.2014 EP 14174771
(43) Date of publication of application: 03.05.2017
(73) Proprietor: Seco Tools AB, 737 82 Fagersta (SE)
(72) Inventor: ALSTERS, Rob, NL-5971 Grubbenvorst (NL)
(74) Representative: Sandvik
(86) International application number: PCT/EP2015/063622
(87) International publication number: WO 2015/197452

(56) References cited:
- EP-A1- 2 730 359
- EP-A2- 1 072 345
- WO-A2-2012/111004
- CH-A5- 675 842
- JP-A- H07 171 707
- US-A- 3 037 264

## Description

### BACKGROUND AND SUMMARY

EP1072345 A2 explains that the design of end mills typically involves a tradeoff between large core diameter, which can assist in providing a rigid tool, and greater tooth depth which can assist in chip removal and lubricant access to the cutting edge, and observes that a constant diameter core is not the best way of allocating limited available space in the design of an end mill. Further, to minimize tool deflection, it is proposed that more metal be provided at portions of the core that tend to be subjected to the greatest bending moment, such as close to where the end mill is gripped by the tool holder or near the ends of tooth flutes closest to the cutter shank. EP10282345A2 proposes an end milling cutter with a core that gradually increases in diameter from the cutting end toward the cutter shank. The resulting end milling cutter design, while representing an improvement, still is substantially lacking in design flexibility for achieving the best balance between chip removal characteristics and tool rigidity.

EP2730359A1 proposes an end mill having a flute bottom diameter which increases in an axial direction from a tool tip toward a shank. According to one embodiment, the mill comprises two core portions with different half taper angles.

CH675842 A5 discloses a rotary milling cutter with the features of the preamble of independent claim 1.

It is desirable to provide an end milling cutter that improves design flexibility for achieving desired balances between chip removal characteristics and tool rigidity.

In accordance with the present invention, a rotary milling cutter with the features of independent claim 1 is provided. Such a milling cutter comprises a core and a plurality of teeth extending from the core, wherein the core comprises a first core portion having a first end proximate a distal end of the cutter and a second core portion, a smallest diameter of the second core being larger than a largest diameter of the first core portion, and at least one of the first core and the second core has a cone angle and increases in diameter in a direction away from the distal end of the cutter, characterized in that a transition portion extends a non-zero axial distance between the first core portion and the second core portion, and comprises a single cone angle that is greater than the cone angle of the at least one of the first and second core portions, or a gradual, concave transition from the cone angle at a second end of the first core portion to a conical or concave portion adjacent a first end of the second core portion. The transition portion has an axial length which is between 0.25 and 0.75 of the core diameter at the second end of the first core portion.

### BRIEF DESCRIPTION OF THE DRAWINGS

The features and advantages of the present invention are well understood by reading the following detailed description in conjunction with the drawings in which like numerals indicate similar elements and in which:
FIG. 1 is a side view of a rotary milling cutter according to an aspect of the present invention;
FIG. 2 is an end view of the rotary milling cutter of FIG. 1; and
FIG. 3 is a partially cross-sectional view of the milling cutter of FIG. 1.

### DETAILED DESCRIPTION

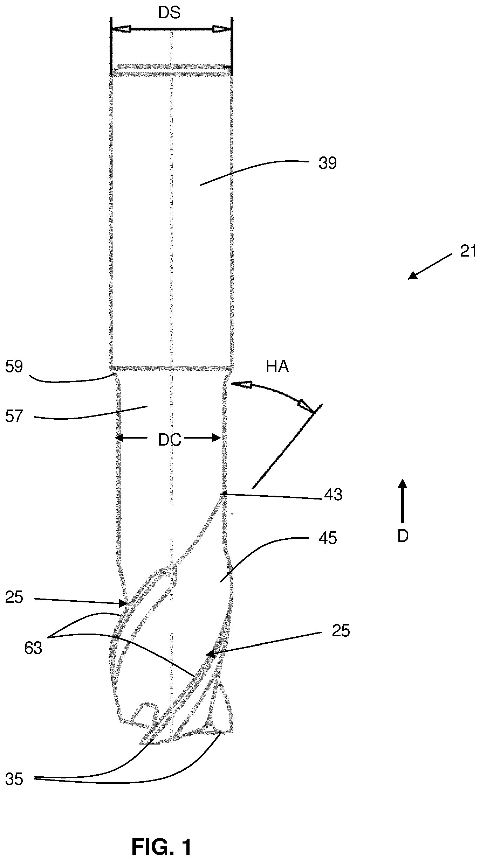

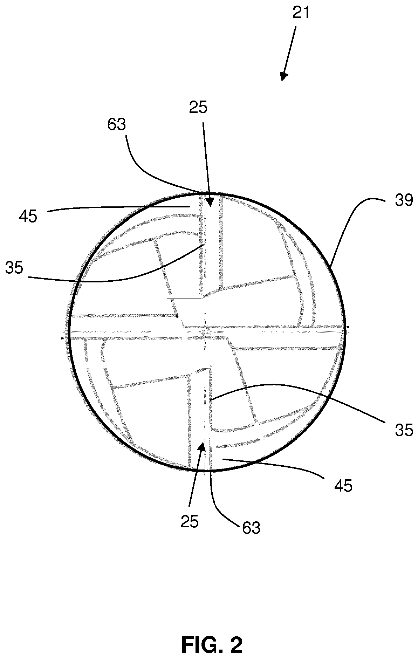

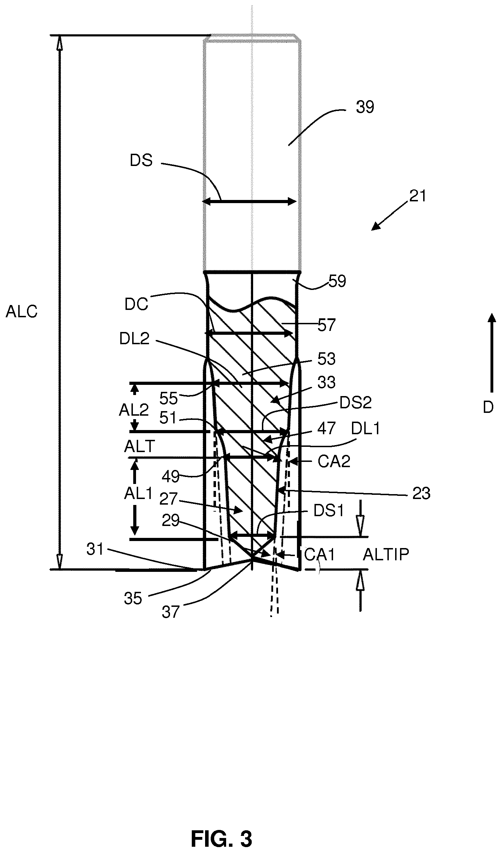

A rotary end milling cutter 21 is shown in FIGS. 1-3 and comprises a core 23 (FIG. 3) and a plurality of teeth 25 extending from the core. The core 23 comprises a first core portion 27 having a first end 29 proximate a distal end 31 of the rotary milling cutter 21 and a second core portion 33. "Proximate" in the sense used here is defined as either at the distal end 31 or close to the distal end but separated from the distal end by a small distance, such as where a portion of a tip cutting edge 35 and/or a portion of a tip 37 of the core is disposed between the first end 29 of the first core portion 27 and the distal end of the cutter.

A smallest diameter DS2 of the second core 33 is larger than a largest diameter DL1 of the first core portion 27. At least one of the first core portion 27 and the second core portion 33 increases in diameter in a direction D away from the distal end 31 of the milling cutter 21. Ordinarily, both the first and the second core portions 27 and 33 increase in diameter in the direction D away from the distal end 31 of the milling cutter 21. Providing a smaller diameter core portion 27 closest to the distal end 31 of the milling cutter 21 can be useful to facilitate chip removal from a hole formed by the workpiece, while providing a larger diameter core further from the distal end can reduce bending of the cutter, particularly at portions of the cutter that tend to be subjected to the greatest bending moment during a cutting operation, especially portions remote from the end of the cutter, such as at the ends 43 of the tooth flutes 45 closest to the shank 39, or near where the milling cutter is gripped by a toolholder, i.e., on the shank. By providing two core portions 27 and 33 of different diameters, the dimensions of the smaller core portion can be optimized for purposes of chip removal while the dimensions of the larger core portion can be optimized for purposes of resistance to bending forces.

A transition portion 47 is disposed between a second end 49 of the first core portion 27 and a first end 51 of the second core portion 33. The transition portion 47 extends a non-zero axial distance between the first core portion 27 and the second core portion 33. At least one of and, ordinarily, both of the first and second core portions 27 and 33 has a cone angle CA1 and CA2. The transition portion 47 can comprise a single cone angle that is greater than the cone angle CA1 or CA2 of the at least one of the first and second core portions 27 and 33, but preferably comprises a gradual, concave transition from the cone angle CA1 at the second end 49 of the first core portion to a conical or concave portion adjacent the first end 51 of the second core portion to avoid sharp transitions from smaller to larger diameters that can be the site of stress concentrations. The axial length ALT of the transition portion 47 is between 0.25 and 0.75, and more preferably between 0.4 and 0.6 of the core diameter at the second end of the first core portion.

A transition portion 53 can be disposed between the second end 55 of the second core portion 33 and a circularly cylindrical portion 57 of the cutter 21. A further transition portion 59 can be provided between the circularly cylindrical portion 57 of the cutter 21 and a larger shank portion 39 that is intended for being gripped by a tool holder. The transition portions 53 and 59 are ordinarily concave in shape to avoid sharp transitions that can be the site of stress concentrations.

The cone angles CA1 and CA2 of the first and the second core portions 27 and 33 can be, but are not necessarily, the same. The at least one of the first and second core portions 27 and 33 has, and typically both have, a cone angle CA1 and/or CA2 of between 3-6 degrees, more preferably between 4-5 degrees, and still more preferably 4.5 degrees. In the illustrated embodiment, the first core portion 27 is axially longer than the second core portion 33, however, it may be shorter. The axial length AL1 of the first core portion 27, including the axial length ALTIP of the tip portion 37, is ordinarily 2 to 4 times, more preferably 2.5 to 3.5 times, and still more preferably about 3 times the diameter DS1 of the first core portion at the first end 29 of the first core portion. The axial length AL2 of the second core portion 33 is typically about 0.5 to 1.5 times, more preferably 0.8 to 1.2 times, and still more preferably about 0.9 to 1.1 times the diameter DS2 of the second core portion at the first end 51 of the second core portion. The first and second core portions 27 and 33 have diameters at their second ends 49 and 55 of DL1 and DL2. The cylindrical portion 57 has a largest cross-sectional dimension DC that is greater than DL2, and the shank portion 39 has a largest cross-sectional dimension DS that is at least as great as DC. The cylindrical portion 57 and the shank portion 39 may be but are not necessarily circularly cylindrical.

The cutter 21 according to the present invention facilitates selecting a first core portion 27 cone angle CA1, a second core portion 33 cone angle CA2, a first core portion length, a second core portion length, and a transition portion length and shape to achieve a desired balance between chip removal characteristics and tool rigidity.

In the illustrated cutter 21, each tooth 25 of the plurality of teeth comprises a cutting edge 63. The cutting edge 63 extends over an entire length of the first core portion 27. The cutting edge 63 may extend over the entire length of the second core portion 33 but ordinarily extends over less than an entire length of the second core portion, and may not extend over the second core portion at all. This can facilitate removal of chips from the flutes 45 around the second core portion 33 which are of lesser depth than the flutes around the first core portion 27. The teeth 25 and flutes 45 are ordinarily helical and define a helical angle HA of between 30-60 degrees, more preferably between 40-50 degrees, and still more preferably about 45 degrees.

The plurality of teeth 25 ordinarily define a cylindrical profile over at least part of an axial length ALC of the cutter 21 when the cutter is rotated around a longitudinal axis thereof, although the teeth may be provided to define a non-cylindrical profile, such as a conical profile. The plurality of teeth 25 define a corresponding plurality of flutes 45, and a depth of the plurality of flutes decreases in the direction away from the distal end 31 of the cutter.

In order to increase cutting tool life, the cutter 21 can be provided with coolant passages. Such coolant may be provided from the shank towards the cutting edges via, for example, internal channels such as a central coolant channel. One or more coolant passages for supplying coolant towards the cutting edges may have discharge openings in a region of the cutter corresponding to any of the first core portion, the second core portion, the tip portion or the transition portion. The cutter may have one or more discharge openings in a region corresponding to the first core portion and one or more discharge openings in a region corresponding to the second core portion, i.e., when viewed along the axial direction, the cutter can have discharge openings on both sides of the transition portion.

While this invention has been illustrated and described in accordance with a preferred embodiment, it is recognized that variations and changes may be made therein without departing from the invention as set forth in the claims.

## Claims

1. A rotary milling cutter (21), comprising a core (23) and a plurality of teeth (25) extending from the core (23), wherein the core (23) comprises a first core portion (27) having a first end (29) proximate a distal end (31) of the cutter and a second core portion (33), a smallest diameter (DS2) of the second core portion (33) being larger than a largest diameter (DL1) of the first core portion (27), wherein at least one of the first core portion (27) and the second core portion (33) has a cone angle (CA1 or CA2) and increases in diameter in a direction away from the distal end (31) of the cutter (21), wherein a transition portion (47) extends a non-zero axial distance between the first core portion (27) and the second core portion (33), and comprises a single cone angle that is greater than the cone angle (CA1 or CA2) of the at least one of the first and second core portions (27 and 33), or a gradual, concave transition from the cone angle (CA1) at a second end (49) of the first core portion (27) to a conical or concave portion adjacent a first end (51) of the second core portion (33), **characterised in that** the transition portion has an axial length (ALT) which is between 0.25 and 0.75 of the core diameter at the second end (49) of the first core portion (27).

2. The rotary milling cutter (21) as set forth in claim 1, wherein both the first and second core portions (27 and 33) increase in diameter in the direction away from the distal end (31) of the cutter (21).

3. The rotary milling cutter (21) as set forth in any of claims 1-2, wherein the first and second core portions (27 and 33) are both axially longer than the transition portion (47).

4. The rotary milling cutter (21) as set forth in any of claims 1-3, wherein the first and second core portions (27 and 33) each have a cone angle (CA1 and CA2).

5. The rotary milling cutter (21) as set forth in claim 4, wherein the cone angles (CA1 and CA2) of the first and second core portions (27 and 33) are the same.

6. The rotary milling cutter (21) as set forth in any of claims 1-5, wherein the at least one of the first and second core portions (27 and 33) has a cone angle (CA1 and CA2) of between 3-6 degrees, more preferably between 4-5 degrees, and still more preferably 4.5 degrees.

7. The rotary milling cutter (21) as set forth in any of claims 1-6, wherein the first core portion (27) is axially longer than the second core portion (33).

8. The rotary milling cutter (21) as set forth in any of claims 1-7, wherein the cutter (21) comprises a cylindrical portion (57) at an end of the second core portion (33) most remote from the distal end (31) of the cutter.

9. The rotary milling cutter (21) as set forth in any of claims 1-8, wherein each tooth of the plurality of teeth (25) comprises a cutting edge (63).

10. The rotary milling cutter (21) as set forth in claim 9, wherein the cutting edge (63) extends over an entire length of the first core portion (27).

11. The rotary milling cutter (21) as set forth in any of claims 9-10, wherein the cutting edge (63) extends over less than an entire length of the second core portion (33).

12. The rotary milling cutter (21) as set forth in any of claims 1-11, wherein the plurality of teeth (25) define a cylindrical profile over at least part of an axial length of the cutter (21) when the cutter is rotated around a longitudinal axis thereof.

13. The rotary milling cutter (21) as set forth in any of claims 1-12, wherein the plurality of teeth (25) define a plurality of flutes (45), a depth of the plurality of flutes (45) decreasing in the direction away from the distal end (31) of the cutter (21).

14. The rotary milling cutter as set forth in any of claims 1-13, wherein the cutter (21) is provided with coolant passages.

15. The rotary milling cutter as set forth in any of claims 1-14, wherein the transition portion has an axial length (ALT) which is between 0.4 and 0.6 of the core diameter at the second end (49) of the first core portion (27).

## Patentansprüche

1. Rotationsfräser (21) mit einem Kern (23) und einer Mehrzahl an Zähnen (25), die sich von dem Kern (23) erstrecken, wobei der Kern (23) einen ersten Kernabschnitt (27) mit einem ersten Ende (29) in der Nähe von einem distalen Ende (31) des Fräsers aufweist und einen zweiten Kernabschnitt (33), wobei der kleinste Durchmesser (DS2) des zweiten Kernabschnitts (33) größer ist als der größte Durchmesser (DL1) des ersten Kernabschnitts (27), wobei wenigstens einer von dem ersten Kernabschnitt (27) und dem zweiten Kernabschnitt (33) einen Konuswinkel (CA1 oder CA2) aufweist und in einer Richtung von dem distalen Ende (31) des Fräsers (21) weg im Durchmesser zunimmt, wobei sich ein Übergangsabschnitt (47) über eine axiale Strecke zwischen dem ersten Kernabschnitt (27) und dem zweiten Kernabschnitt (33), die nicht Null ist, erstreckt und einen einzelnen Konuswinkel aufweist, der größer ist als der Konuswinkel (CA1 oder CA2) des wenigstens einen des ersten und zweiten Kernabschnitts (27 und 33), oder einen sukzessiven konkaven Übergang von dem Konuswinkel (CA1) an dem zweiten Ende (49) des ersten Kernabschnitts (27) zu einem konischen oder konkaven Abschnitt der zu dem ersten Ende (51) des zweiten Kernabschnitts (33) benachbart ist, aufweist,
**dadurch gekennzeichnet, dass** der Übergangsbereich eine axiale Länge (ALT) aufweist, die zwischen 0,25 und 0,75 des Kerndurchmessers an dem zweiten Ende (49) des ersten Kernabschnitts (27) ist.

2. Rotationsfräser (21) nach Anspruch 1, wobei sowohl der erste als auch der zweite Kernabschnitt (27 und 33) in Richtung weg von dem distalen Ende (31) des Fräsers (21) im Durchmesser zunehmen.

3. Rotationsfräser (21) nach einem der Ansprüche 1-2, wobei die ersten und zweiten Kernabschnitte (27 und 33) beide axial länger sind als der Übergangsabschnitt (47).

4. Rotationsfräser (21) nach einem der Ansprüche 1-3, wobei die ersten und zweiten Kernabschnitte (27 und 33) jeweils einen Konuswinkel (CA1 und CA2) aufweisen.

5. Rotationsfräser (21) nach Anspruch 4, wobei die Konuswinkel (CA1 und CA2) der ersten und zweiten Kernabschnitte (27 und 33) gleich sind.

6. Rotationsfräser (21) nach einem der Ansprüche 1-5, wobei der wenigstens eine der ersten und zweiten Kernabschnitte (27 und 33) einen Konuswinkel (CA1 und CA2) von zwischen 3-6°, vorzugsweise von zwischen 4-5° und noch bevorzugter von 4,5° aufweist.

7. Rotationsfräser (21) nach einem der Ansprüche 1-6, wobei der erste Kernabschnitt (27) axial länger ist als der zweite Kernabschnitt (33).

8. Rotationsfräser (21) nach einem der Ansprüche 1-7, wobei der Fräser (21) an einem Ende des zweiten Kernabschnitts (33), das von dem distalen Ende (31) des Fräsers am meisten entfernt ist, einen zylindrischen Abschnitt (57) aufweist.

9. Rotationsfräser (21) nach einem der Ansprüche 1-8, wobei jeder Zahn der Mehrzahl an Zähnen (25) eine Schneidkante (63) aufweist.

10. Rotationsfräser (21) nach Anspruch 9, wobei sich die Schneidkante (63) über eine gesamte Länge des ersten Kernabschnitts (27) erstreckt.

11. Rotationsfräser (21) nach einem der Ansprüche 9-10, wobei sich die Schneidkante (63) über weniger als die gesamte Länge des zweiten Kernabschnitts (33) erstreckt.

12. Rotationsfräser (21) nach einem der Ansprüche 1-11, wobei die Mehrzahl an Zähnen (25) über wenigstens einen Teil der axialen Länge des Fräsers (21) ein zylindrisches Profil definieren, wenn der Fräser um eine Längsachse davon rotiert wird.

13. Rotationsfräser (21) nach einem der Ansprüche 1-12, wobei die Mehrzahl an Zähnen (25) eine Mehrzahl an Furchen (45) definieren, wobei eine Tiefe der Mehrzahl an Furchen (45) in Richtung weg von dem distalen Ende (31) des Fräsers (21) abnimmt.

14. Rotationsfräser nach einem der Ansprüche 1-13, wobei der Fräser (21) mit Kühldurchgängen ausgestattet ist.

15. Rotationsfräser nach einem der Ansprüche 1-14, wobei der Übergangsabschnitt eine axiale Länge (ALT) aufweist, die zwischen 0,4 und 0,6 des Kerndurchmessers an dem zweiten Ende (49) des ersten Kernabschnitts (27) liegt.

## Revendications

1. Fraise rotative (21), comprenant une partie centrale (23) et une pluralité de dents (25) s'étendant depuis la partie centrale (23), où la partie centrale (23) comprend une première section de partie centrale (27) présentant une première extrémité (29) proche d'une extrémité distale (31) de la fraise et une seconde section de partie centrale (33), un diamètre le plus petit (DS2) de la seconde section de partie centrale (33) étant supérieur à un diamètre le plus grand (DL1) de la première section de partie centrale (27), où au moins une section parmi la première section de partie centrale (27) et la seconde section de partie centrale (33) présente un angle de conicité (CA1 ou CA2) et augmente en diamètre dans une direction s'écartant de l'extrémité distale (31) de la fraise (21), où une section de transition (47) s'étend sur une distance axiale non nulle entre la première section de partie centrale (27) et la seconde section de partie centrale (33), et comprend un unique angle de conicité qui est supérieur à l'angle de conicité (CA1 ou CA2) de la au moins une section parmi les première et seconde sections de partie centrale (27 et 33), ou une transition concave graduelle depuis l'angle de conicité (CA1) au niveau d'une seconde extrémité (49) de la première section de partie centrale (27) jusqu'à une section conique ou concave adjacente à une première extrémité (51) de la seconde section de partie centrale (33),
**caractérisée en ce que** la section de transition présente une longueur axiale (ALT) qui est comprise entre 0,25 et 0,75 fois le diamètre de partie centrale au niveau de la seconde extrémité (49) de la première section de partie centrale (27).

2. Fraise rotative (21) selon la revendication 1, dans laquelle les première et seconde sections de partie centrale (27 et 33) augmentent toutes deux en diamètre dans la direction s'écartant de l'extrémité distale (31) de la fraise (21).

3. Fraise rotative (21) selon l'une quelconque des revendications 1 et 2, dans laquelle les première et seconde sections de partie centrale (27 et 33) sont toutes deux axialement plus longues que la section de transition (47).

4. Fraise rotative (21) selon l'une quelconque des revendications 1 à 3, dans laquelle les première et seconde sections de partie centrale (27 et 33) présentent chacune un angle de conicité (CA1 et CA2).

5. Fraise rotative (21) selon la revendication 4, dans laquelle les angles de conicité (CA1 et CA2) des première et seconde sections de partie centrale (27 et 33) sont identiques.

6. Fraise rotative (21) selon l'une quelconque des revendications 1 à 5, dans laquelle la au moins une section parmi les première et seconde sections de partie centrale (27 et 33) présente un angle de conicité (CA1 et CA2) allant de 3 à 6 degrés, de préférence de 4 à 5 degrés, et de façon davantage préférée de 4,5 degrés.

7. Fraise rotative (21) selon l'une quelconque des revendications 1 à 6, dans laquelle la première section de partie centrale (27) est axialement plus longue que la seconde section de partie centrale (33).

8. Fraise rotative (21) selon l'une quelconque des revendications 1 à 7, où la fraise (21) comprend une section cylindrique (57) au niveau d'une extrémité de la seconde section de partie centrale (33) la plus éloignée de l'extrémité distale (31) de la fraise.

9. Fraise rotative (21) selon l'une quelconque des revendications 1 à 8, dans laquelle chaque dent de la pluralité de dents (25) comprend une arête de coupe (63).

10. Fraise rotative (21) selon la revendication 9, dans laquelle l'arête de coupe (63) s'étend sur toute la longueur de la première section de partie centrale (27).

11. Fraise rotative (21) selon l'une quelconque des revendications 9 et 10, dans laquelle l'arête de coupe (63) s'étend sur moins de toute la longueur de la seconde section de partie centrale (33).

12. Fraise rotative (21) selon l'une quelconque des revendications 1 à 11, dans laquelle la pluralité de dents (25) définissent un profil cylindrique sur au moins une partie d'une longueur axiale de la fraise (21) lorsque la fraise est entraînée en rotation autour de son axe longitudinal.

13. Fraise rotative (21) selon l'une quelconque des revendications 1 à 12, dans laquelle la pluralité de dents (25) définissent une pluralité de goujures (45), une profondeur de la pluralité de goujures (45) diminuant dans la direction s'écartant de l'extrémité distale (31) de la fraise (21).

14. Fraise rotative selon l'une quelconque des revendications 1 à 13, où la fraise (21) est dotée de passages pour réfrigérant.

15. Fraise rotative selon l'une quelconque des revendications 1 à 14, dans laquelle la section de transition présente une longueur axiale (ALT) qui est comprise entre 0,4 et 0,6 fois le diamètre de partie centrale au niveau de la seconde extrémité (49) de la première section de partie centrale (27).
